# EUROPEAN PATENT APPLICATION

(11) **EP 1 783 414 A1**
(43) Date of publication of application: **09.05.2007**
(21) Application number: 06123054.6
(22) Date of filing: 27.10.2006
(51) Int. Cl.: F16L 33/22, A01G 25/00, A01G 25/02, F16L 37/098

(54) **Universal fitting for flexible tubes, preferably for above-ground irrigation systems**

(30) Priority: 02.11.2005 IT MI20050384
(71) Applicant: CLABER S.P.A., I-33080 Fiume Veneto Pordenone (IT)
(72) Inventor: Spadotto, Oliviano, 33170 Pordenone (IT)
(74) Representative: Mittler, Enrico

(57) **Abstract**

A fitting for flexible tubes, preferably for irrigation systems, is described consisting of a cylindrical body (1) with longitudinal through-hole (2) having at least one end (4) couplable with a flexible tube (20) by means of a hollow cylindrical internal spigot (5) and locking means (9) of said flexible tube, characterised in that said hollow internal cylindrical spigot (5) has an external surface (7) with variable diameter decreasing in steps (21) towards said at least one end (4).

## Description

The present invention relates to a universal fitting for flexible tubes, preferably for above-ground irrigation systems.

Having tools to take the water to the zone to be watered from the water source is important to irrigate large plots of land or small-sized gardens.

Fitting means allowing a secure and effective conveying of water are used to join two tubes or a tube and a source (e.g. a normal garden tap with external threading).

In particular, a fitting with male coupling element connecting to a female fitting is contemplated for attaching to the tap. A female fitting receiving a male coupling element comprised within the dispensing terminal is instead contemplated for attaching a dispensing terminal.

Female fittings consisting of a cylindrical body with longitudinal through-hole having a first end for coupling with a male coupling element and second end comprising an internal cylindrical spigot, which is coupled to the end of a flexible tube, are known.

Said flexible tube is locked by means of a crown of locking fins forced inwards, i.e. towards the flexible tube, by a ring which may be screwed onto said hollow cylindrical body.

The diameter of the internal surface and of the external surface of the internal cylindrical spigot is either constant or slightly decreasing continuously towards said second end, so that different female fittings are required for flexible tubes of different diameters.

It is the object of the present invention to make a fitting, preferably for above-ground irrigation systems, which is capable of joining flexible tubes of different diameter.

According to the invention, this object is obtained by a fitting consisting of a cylindrical body with longitudinal through-hole having at least one end couplable with a flexible tube by means of a hollow cylindrical internal spigot and locking means of said flexible tube, characterised in that said hollow internal cylindrical spigot has an external surface with variable diameter decreasing in steps towards said at least one end.

A different size of the diameter of a flexible tube to be coupled to said fitting corresponds to each step.

It is apparent the advantage of being able to use the same fitting for flexible tubes of different diameter.

These and other features of the present invention will be further explained in the following detailed description of a practical embodiment shown by the way of non-limitative example in the attached drawings, in which:

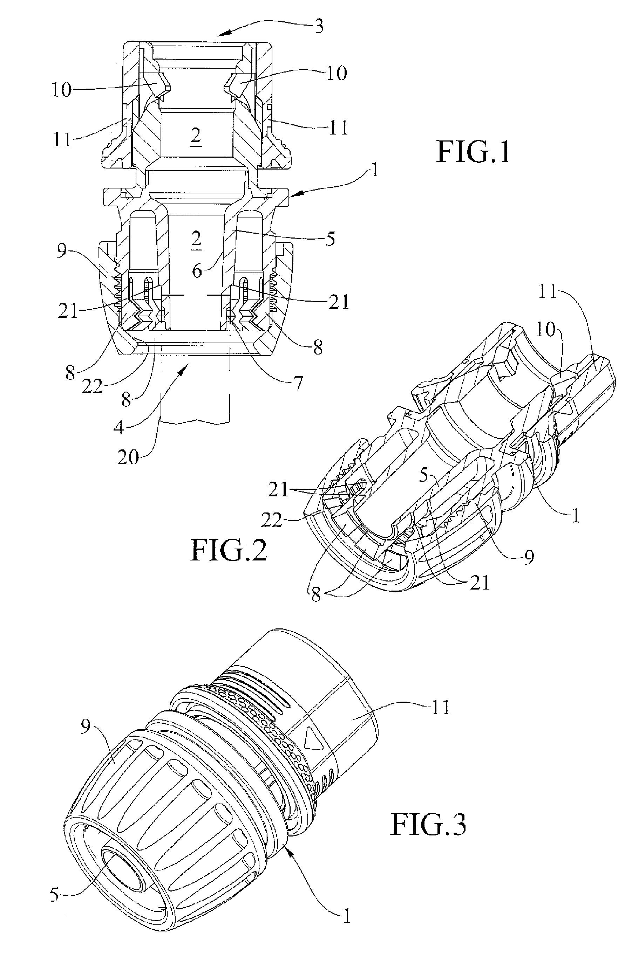

figure 1 shows an axial section plan view of a fitting according to the present invention;
figure 2 shows a perspective view in axial section of the fitting;
figure 3 shows an external perspective view of the fitting.

The fitting shown in the figures is a female type fitting consisting of a cylindrical body 1 with longitudinal through-hole 2 having a firste end 3 for coupling to a male fitting (not shown) and a second end 4 for coupling to a flexible tube 20.

At said second end 4, body 1 has a hollow cylindrical internal spigot 5 having an internal surface 6 with continuously (nearly constant) slightly decreasing diameter and an external surface with discontinuously decreasing diameter towards end 4 essentially in steps 21.

Body 1 also comprises flexible fins 8 for locking the flexible tube onto the spigot 5 having and external fastening ring 9 fastenable onto said body 1 and provided with an oblique narrowing 22 on one end.

Mobile locking teeth 10 which may be operated by an axially mobile external crown 11 are identified at said first end 3 to fasten/release the female fitting to/from a male fitting (not shown).

The coupling of flexible tube 20 with the fitting is very simple: step 21 most suitable for tube 20 to be coupled is selected and locked by turning ring 9. Said turning allows the narrowing 22 of the ring 9 to force the fins 8 against the tube, thus locking it.

The coupling with the male fitting occurs instead by snapping of teeth 10. The release is made by operating external crown 11.

The number of steps 21 may vary according to the length of spigot 5.

## Claims

1. A fitting for flexible tubes, preferably for irrigation systems, consisting of a cylindrical body (1) with longitudinal through-hole (2) having at least one end (4) couplable with a flexible tube (20) by means of a hollow cylindrical internal spigot (5) and locking means (9) of said flexible tube, **characterised in that** said hollow internal cylindrical spigot (5) has an external surface (7) with variable diameter decreasing in steps (21) towards said at least one end (4).

2. A fitting according to claim 1, **characterised in that** it comprises a first end (3) couplable with a male fitting and a second end (4) coupling with a flexible tube (20).

3. A fitting according to claim 1 or 2, **characterised in that** said locking means consists in an external ring (9) which can be screwed onto the cylindrical body (1).

4. A fitting according to claim 3, **characterised in that** it comprises flexible fins (8) for locking the flexible tube (20) onto the internal spigot (5) interposed between said internal spigot (5) and the external ring (9).

5. A fitting according to claim 2, **characterised in that** it comprises means (10, 11) for fastening/releasing to/from a male fitting at said first end (3).

6. A fitting according to claim 5, **characterised in that** said fastening/releasing means (10, 11) consist of internal mobile teeth (10) connected to an external mobile crown (11).

7. A fitting according to claim 1, **characterised in that** said internal spigot (5) presents an internal surface (6) with either constant or continuously slightly decreasing diameter.
